# FASCICULE DE BREVET EUROPEEN

(11) **EP 1 603 761 B1**
(45) Date de publication et mention de la délivrance du brevet: **18.04.2012**
(21) Numéro de dépôt: 03799674.1
(22) Date de dépôt: 19.12.2003
(51) Int. Cl.: B60G 15/06, B60G 17/015

(54) **ATTACHE SUPERIEURE DE JAMBE MACPHERSON**
OBERE VERANKERUNG EINES MACPHERSON- FEDERBEINS
UPPER MOUNTING FOR A MACPHERSON STRUT

(30) Priorité: 23.12.2002 FR 0216514
(43) Date de publication de la demande: 14.12.2005
(73) Titulaire: Renault s.a.s., 92100 Boulogne Billancourt (FR)
(72) Inventeur: AUDAGE, Philippe, F-78460 Chevreuse (FR); ROLLET, Rémi, F-91190 Gif sur Yvette (FR)
(86) Numéro de dépôt international: PCT/FR2003/003849
(87) Numéro de publication internationale: WO 2004/058522

(56) Documents cités:
- US-A- 6 155 543
- US-A1- 2001 015 537
- US-B1- 6 267 512

## Description

L'invention concerne un dispositif de fixation supérieure d'un amortisseur de suspension d'une roue avant d'un véhicule automobile.

Les dispositifs de fixation supérieure d'un amortisseur de suspension avant comprennent généralement une coupelle supérieure assurant le rebond ou l'amortissement des mouvements axiaux vers le sol est une coupelle inférieure disposée au-dessous de la coupelle supérieure et assurant le choc ou l'amortissement des mouvements axiaux dans la direction opposée. Les coupelles supérieure et inférieure sont placées sur l'extrémité filetée de la tige de l'amortisseur et fixées sur celle-ci à l'aide d'un organe de vissage. La coupelle supérieure est reliée à une masse en matériau élastomère comportant une armature métallique. Une partie de la masse est fixée à la structure du véhicule et une autre partie est en contact axial et radial avec une butée à billes reposant sur le ressort de l'amortisseur. L'amortissement des mouvements axiaux est assuré d'une part par la coupelle supérieure et une partie de la masse située en regard et à faible distance au-dessous de celle-ci pour les rebonds, et d'autre part par la coupelle inférieure et une autre partie de la masse située en regard et à faible distance au-dessus de celle-ci pour les chocs.

Ce dispositif présente toutefois un poids relativement élevé, les coupelles étant en matériau métallique, souvent en tôle d'acier.

Le document US 6155543 décrit l'assemblage d'un ressort d'axe incliné par rapport à l'axe de la jambe de force. L'invention vise à pallier à ces inconvénients en proposant un dispositif de fixation supérieure d'un amortisseur de suspension simple de poids réduit apte à assurer le rebond et le choc.

A cet effet, un premier objet de l'invention concerne un dispositif de fixation supérieure d'un amortisseur de suspension d'une roue avant au châssis d'un véhicule automobile, l'amortisseur étant composé d'un corps, d'une tige déplaçable en translation à l'intérieur de ce corps et d'un ressort à spire montée concentrique autour de la tige. Le dispositif comprend :
- une unique coupelle fixée sur l'extrémité libre de la tige et de concavité dirigée vers le bord de cette extrémité,
- une masse en matériau élastomère comportant une armature, et
- des moyens de liaison entre le ressort et ladite masse élastomère.

La masse élastomère est solidarisée à ladite coupelle et fixée au châssis du véhicule de façon à assurer l'amortissement des mouvements du véhicule sensiblement suivant l'axe de la tige. Le dispositif présente l'avantage de supprimer une coupelle, ce qui permet un gain de poids et une réduction du coût de fabrication.

Dans un mode de réalisation, la coupelle présente une paroi latérale dont l'extrémité libre comporte un rebord saillant radialement vers l'extérieur de la coupelle et situé dans un plan sensiblement perpendiculaire à l'axe de la tige.

Dans une variante, une première partie de ladite masse élastomère recouvre la paroi latérale et le rebord de la coupelle et s'étend sensiblement radialement à l'extérieur de celle-ci, de sorte qu'un espace est formé entre la face inférieure du rebord et la masse élastomère afin d'amortir les rebonds du véhicule. Ladite première partie comprend en outre un bourrelet situé sur la face supérieure du rebord et destiné à venir en butée contre le châssis du véhicule lors d'un choc axial. Ainsi la coupelle et la masse élastomère associée suffisent à assurer l'amortissement des mouvements axiaux du véhicule vers le haut ou vers le bas.

Dans une autre variante, l'armature de la masse élastomère présente une partie de fixation au châssis du véhicule s'étendant dans un plan sensiblement perpendiculaire à l'axe de la tige et situé légèrement en dessous du bord de la coupelle, ladite partie de fixation étant située à distance du bord de la coupelle dans la direction radiale.

En particulier, ladite partie de fixation peut s'étendre dans un plan sensiblement parallèle au rebord de la coupelle et situé légèrement en dessous de celui-ci, ladite partie étant située sensiblement au-dessus du ressort dans la direction axiale.

Encore dans une variante, lesdits moyens de liaison comprennent une butée à billes reposant sur le ressort de l'amortisseur et en contact axial et radial avec une deuxième partie de la masse élastomère. Notamment, une extrémité de l'armature de la masse élastomère peut être disposée sensiblement en regard radialement de ladite butée à billes, cette dernière étant séparée de ladite extrémité par une faible épaisseur de matériau élastomère. Cette disposition permet d'assurer une bonne raideur radiale afin de limiter les éventuels mouvements radiaux au niveau de la butée à billes.

Un autre objet de l'invention concerne un châssis de véhicule automobile destiné à recevoir au moins un dispositif de fixation supérieure d'un amortisseur de "suspension d'une roue avant tel que décrit précédemment. Le châssis est relié rigidement à la masse élastomère de sorte qu'une partie du châssis soit située sensiblement au-dessus du bord de la coupelle, à distance de ce dernier.

Dans une variante, l'extrémité libre du châssis est située sensiblement au-dessus du bourrelet de la masse élastomère.

L'invention concerne également un véhicule automobile comprenant un tel châssis.

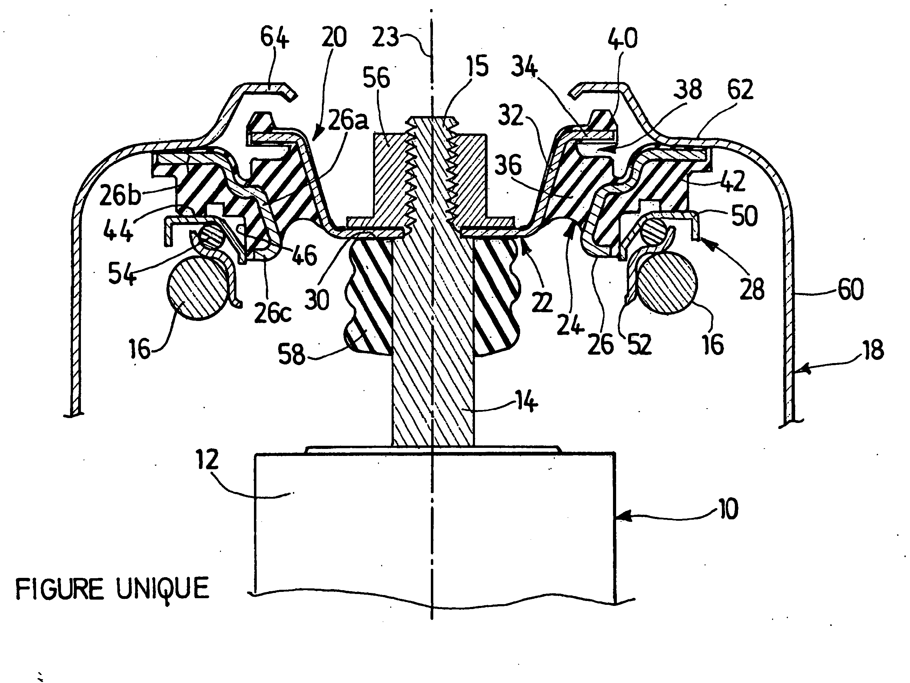

L'invention est maintenant décrite en référence au dessin annexé, non limitatif, dans lequel la figure unique est une représentation schématique en coupe axiale d'un dispositif selon l'invention.

Sur la figure unique, on a représenté la partie supérieure d'un amortisseur 10 de suspension avant d'un véhicule automobile. Cet amortisseur se compose habituellement d'un corps 12 (partiellement représenté) et d'une tige 14 d'amortisseur déplaçable en translation à l'intérieur de ce corps et d'un ressort 16.

L'amortisseur 10 est de manière classique relié par son extrémité inférieure à la roue du véhicule par une rotule (non représentée). L'extrémité supérieure de cet amortisseur est reliée au châssis 18 du véhicule par un dispositif de fixation 20 selon l'invention.

Le ressort 16 est généralement un ressort à spires, dont la spire inférieure est en appui sur le corps 12 de l'amortisseur et dont la spire supérieure est en butée sur le dispositif de fixation 20 (seule la spire supérieure est représentée sur la figure).

Le dispositif de fixation comprend :
- une unique coupelle 22 fixée sur l'extrémité libre 15 de la tige 14,
- une masse en matériau élastomère 24 comportant une armature 26, et
- des moyens de liaison 28 entre le ressort 16 et ladite masse élastomère 24.

La coupelle 22 présente un axe de révolution 23, et comporte un fond 30 et une paroi latérale 32. Dans la suite du texte, les directions axiale et radiale correspondent respectivement aux directions parallèle et perpendiculaire à l'axe de révolution 23.

Le fond 30 comporte en son centre un orifice axial permettant l'introduction de la tige 14. La coupelle repose sur un épaulement de la tige 14. La paroi latérale 32 comporte à son extrémité libre un rebord 34 saillant radialement vers l'extérieur de la coupelle 22 sur toute la périphérie de celle-ci. Ce rebord 34 s'étend dans un plan sensiblement perpendiculaire à l'axe de révolution 23 de la coupelle.

Lorsqu'elle est montée sur la tige 14, la coupelle 22 a sa concavité dirigée vers le bord de l'extrémité libre 15 de la tige.

La masse en matériau élastomère 24 est solidarisée ou adhérisée à la coupelle 22. Elle présente une symétrie de révolution dont l'axe est confondu avec l'axe de révolution 23 de la coupelle 22. La masse 24 comprend une première partie 36 solidaire de la paroi latérale 32 et du rebord 34 de la coupelle, le matériau élastomère les recouvrant quasiment totalement. Cette partie 36 s'étend sensiblement radialement à l'extérieur de la coupelle, de sorte qu'un espace 38 est formé entre la face inférieure du rebord 34 et le matériau élastomère. Cet espace est tel que, lors d'un rebond du véhicule, la face inférieure du rebord 34 peut venir en contact avec la masse élastomère 24 de façon à amortir le mouvement axial du haut vers le bas. Cette première partie 36 comprend également un bourrelet 40 sur la face supérieure du rebord 34 de la coupelle. Ce bourrelet 40 est destiné à venir en butée contre le châssis du véhicule lors d'un choc axial (mouvement de bas en haut). Ainsi, l'amortissement des mouvements axiaux est réalisé par le rebord 34 et la masse élastomère 24 grâce au bourrelet 40 et à l'espace 38.

La masse élastomère 24 comprend une deuxième partie 42 séparée de la première partie par une partie centrale 26a de l'armature 26. Cette partie centrale 26a est sensiblement parallèle à la paroi latérale 32 de la coupelle. Elle est prolongée dans la deuxième partie 42, et son extrémité forme une partie de fixation 26b au châssis du véhicule. Cette partie de fixation 26b s'étend dans un plan sensiblement perpendiculaire à l'axe de révolution 23 en s'éloignant de ce dernier et situé légèrement en dessous du rebord 34 de la coupelle, à distance dudit rebord 34 dans la direction radiale. Ladite partie 26b est située sensiblement au-dessus de la spire supérieure du ressort 16 dans la direction axiale. L'autre extrémité 26c de la partie 26a s'étend également dans un plan sensiblement perpendiculaire à l'axe de révolution 23 en s'éloignant de ce dernier. Elle est située sensiblement en dessous, axialement, du rebord 34, comme représenté sur la figure.

La deuxième partie 42 de la masse en élastomère présente une surface 44 située dans un plan sensiblement parallèle à la partie de fixation 26b de l'armature et légèrement au-dessus du fond 30 de la coupelle. Cette surface 44 est située sensiblement en dessous, axialement, de la partie de fixation 26b. Une surface 46 s'étendant sensiblement axialement, perpendiculairement à la surface 44, est située à proximité de l'extrémité 26c de l'armature, et sensiblement en dessous, axialement de l'extrémité du rebord 34 de la coupelle.

Les moyens de liaisons 28 comprennent une butée à billes ou butée tournante. La butée à billes est constituée de deux parties annulaires supérieure 50 et inférieure 52 qui forment entre elles un logement annulaire pour des billes 54. La partie annulaire supérieure 50 prend appui sur les surfaces 44 et 46 de la masse élastomère. La partie annulaire inférieure 52 prend appui sur la spire supérieure du ressort 16, tel que représenté. D'autres moyens de liaison peuvent cependant être employés.

Un organe de vissage 56, tel qu'un écrou, est vissé sur l'extrémité filetée 15 de la vis, au-dessus de la coupelle 22, afin de fixer cette dernière sur la tige. Toutefois, d'autres moyens de fixation de la coupelle à la tige peuvent être employés. Lorsque la coupelle 22 est fixée sur la tige 15, l'axe de révolution de la coupelle 22 et de la masse élastomère 24 est confondu avec l'axe longitudinal de la tige 14.

Un élément formant butée 58 est disposé contre le fond 30 de la coupelle et en dessous de celle-ci, afin de protéger la coupelle au cas où le corps 12 de l'amortisseur risquerait de venir en contact avec celle-ci.

Seule la partie du châssis 18 destinée à la fixation du dispositif de fixation selon l'invention est représentée sur la figure. Le châssis 18 comprend une partie cylindrique 60 (représentée partiellement) entourant la partie supérieure de l'amortisseur 10 et le dispositif 20 selon l'invention et dont l'axe de symétrie est confondu avec l'axe de révolution 23 lorsque le dispositif 20 est en place. L'extrémité supérieure de cette partie cylindrique 60 présente une partie annulaire 62, sensiblement perpendiculaire à l'axe de révolution 23, et dirigée vers la tige 14. Cette partie annulaire 62 est disposée de façon à venir en contact avec et à reposer sur l'extrémité 26b de l'armature noyée dans la masse élastomère 24. Il est alors possible de fixer la partie annulaire 62 à l'extrémité 26b, par exemple au moyen de vis (non représentées).

Le châssis 18 comprend une autre partie annulaire 64 située dans le prolongement de la partie annulaire 62, vers le haut, en direction de l'axe de révolution 23. Cette partie annulaire 64 s'étend sensiblement perpendiculairement à l'axe de révolution 23, au-dessus du rebord 34 de la coupelle et du bourrelet 40 suivant la direction axiale.

L'agencement du châssis, de la coupelle et de la masse élastomère permet à la première partie 36 de la masse élastomère d'assurer la transmission des efforts du corps 12 de l'amortisseur, tandis que la deuxième partie 42 de la masse élastomère assure la transmission des efforts du ressort 16. A cet effet, l'épaisseur de la partie 42, correspondant sensiblement à la distance entre la surface 44 et l'extrémité 26b de l'armature, est suffisante pour permettre l'absorption des vibrations du ressort 16. Une faible épaisseur de matériau élastomère entre l'extrémité 26c de l'armature et la butée à billes permet par ailleurs d'assurer une bonne raideur radiale à ce niveau.

Ainsi, un mouvement axial de bas en haut, ou choc, est amorti par le contact du bourrelet 40 sur la partie annulaire 64 du châssis, tandis qu'un mouvement axial de haut en bas, ou rebond, est amorti par l'écrasement de l'espace 38 et le contact entre le rebord 34 de la coupelle et la masse élastomère.

Bien entendu, d'autres modes de réalisation de l'invention peuvent être envisagés sans sortir du cadre de l'invention. En particulier, d'autres formes de la masse élastomère 24 et de son armature 26 peuvent être envisagées.

## Revendications

1. Dispositif de fixation supérieure (20) d'un amortisseur (10) de suspension d'une roue avant au châssis (18) d'un véhicule automobile, l'amortisseur (10) étant composé d'un corps (12), d'une tige (14) déplaçable en translation à l'intérieur de ce corps et d'un ressort (16) à spire montée concentrique autour de la tige, **caractérisé en ce qu'**il comprend:
- une unique coupelle (22) fixée sur l'extrémité libre (15) de la tige et de concavité dirigée vers le bord de cette extrémité, la coupelle (22) présentant une paroi latérale (32) dont l'extrémité libre comporte un rebord (34) saillant radialement vers l'extérieur de la coupelle et situé dans un plan sensiblement perpendiculaire à l'axe de la tige
- une masse en matériau élastomère (24) comportant une armature (26), et
- des moyens de liaison (28) entre le ressort (16) et ladite
masse élastomère (24),
et **en ce que** ladite masse élastomère (24) est solidarisée à ladite coupelle (22) et fixée au châssis (18) du véhicule de façon à assurer l'amortissement des mouvements du véhicule sensiblement suivant l'axe de la tige,
une première partie (36) de ladite masse élastomère (24) recouvre
la paroi latérale (32) et le rebord (34) de la coupelle et s'étend sensiblement radialement à l'extérieur de celle-ci, de sorte qu'un espace (38) est formé entre la face inférieure du rebord (34) et la masse élastomère (24) afin d'amortir les rebonds du véhicule, et ladite première partie (36) comprend un bourrelet (40) situé sur la face supérieure du rebord (34) et destiné à venir en butée contre le châssis (18) du véhicule lors d'un choc axial.

2. Dispositif selon la revendication 1, **caractérisé en ce que** l'armature (26) de la masse élastomère (24) présente une partie de fixation (26 b) au châssis (18) du véhicule s'étendant dans un plan sensiblement perpendiculaire à l'axe de la tige et situé légèrement en dessous du bord de la coupelle, ladite partie de fixation étant située à distance du bord de la coupelle dans la direction radiale.

3. Dispositif selon la revendication 2, **caractérisé en ce que** ladite partie de fixation (26b) s'étend dans un plan sensiblement parallèle au rebord (34) de la coupelle et situé légèrement en dessous de celui-ci, ladite partie (26b) étant située sensiblement au-dessus du ressort (16) dans la direction axiale.

4. Dispositif selon l'une des revendications 1 à 3, **caractérisé en ce que** lesdits moyens de liaison (28) comprennent une butée à billes (50, 52, 54) reposant sur le ressort (16) de l'amortisseur et en contact axial et radial avec une deuxième partie (42) de ladite masse élastomère (24).

5. Dispositif selon la revendication 4, **caractérisé en ce qu'**une extrémité (26 c) de l'armature de la masse élastomère (24) est disposée sensiblement en regard radialement de ladite butée à billes (50, 52, 54), cette dernière étant séparée de ladite extrémité (26 c) par une faible épaisseur de matériau élastomère.

6. dispositif selon l'une des revendications 1 à5, **caractérisé en ce que** l'extrémité libre (15) de la tige (14) est filetée et **en ce que** la coupelle (22) est fixée sur la tige au moyen d'un organe de vissage (56) vissé sur l'extrémité libre (15).

7. Dispositif selon l'une des revendications 1 à 6, **caractérisé en ce qu'**il comprend un élément formant butée (58) disposé sur la tige (14) contre la coupelle (22) et en dessous de celle-ci.

8. Châssis (18) de véhicule automobile destiné à recevoir au moins un dispositif de fixation supérieure (20) d'un amortisseur de suspension d'une roue avant selon l'une des revendications 1 à 7, **caractérisé en ce qu'**il est relié rigidement à la masse élastomère de sorte qu'une partie (64) du châssis soit située sensiblement au-dessus du bord de la coupelle (22), à distance de ce dernier.

9. Châssis (18) selon la revendication 8 lorsqu'elle dépend de la revendication 1 ou de revendications dépendant de la revendication 1, **caractérisé en ce que** l'extrémité libre (64) du châssis est située sensiblement au-dessus du bourrelet (40) de la masse élastomère (24).

10. Véhicule automobile **caractérisé en ce qu'**il comprend un châssis (18) selon l'une des revendications 8 ou 9.

## Claims

1. Upper device (20) for attaching a front wheel suspension shock absorber (10) to the chassis (18) of a motor vehicle, the shock absorber (10) being made up of a body (12), of a rod (14) capable of translational movement inside this body and of a coil spring (16) mounted concentrically around the rod, **characterized in that** it comprises:
- a single spring cup (22) fixed to the free end (15) of the rod and with its concave side facing towards the edge of this end, the spring cup (22) having a side wall (32) the free end of which comprises a rim (34) projecting radially out from the spring cup and situated in a plane substantially perpendicular to the axis of the rod
- a mass of elastomeric material (24) comprising a framework (26), and
- means (28) of connection between the spring (16) and the said elastomeric mass (24),
and **in that** the said elastomeric mass (24) is secured to the said spring cup (22) and fixed to the chassis (18) of the vehicle so as to damp the movements of the vehicle substantially along the axis of the rod,
a first part (36) of the said elastomeric mass (24) covers the side wall (32) and the rim (34) of the spring cup and extends substantially radially out therefrom so that a space (38) is created between the underside of the rim (34) and the elastomeric mass (24) to damp the bouncing of the vehicle, and the said first part (36) comprises a bulge (40) situated on the top surface of the rim (34) and intended to butt against the chassis (18) of the vehicle in the event of an axial shock.

2. Device according to Claim 1, **characterized in that** the framework (26) of the elastomeric mass (24) has a part (26b) for attachment to the chassis (18) of the vehicle extending in a plane substantially perpendicular to the axis of the rod and situated slightly lower down than the edge of the spring cup, the said attachment part being situated some distance in the radial direction from the edge of the spring cup.

3. Device according to Claim 2, **characterized in that** the said attachment part (26b) extends in a plane substantially parallel to the rim (34) of the cup and situated slightly lower down than this rim, the said part (26b) being situated substantially above the spring (16) in the axial direction.

4. Device according to one of Claims 1 to 3, **characterized in that** the connecting means (28) comprise a thrust ball bearing (50, 52, 54) resting on the spring (16) of the shock absorber and in axial and radial contact with a second part (42) of the said elastomeric mass (24).

5. Device according to Claim 4, **characterized in that** one end (26c) of the framework of the elastomeric mass (24) is positioned substantially radially facing the said thrust ball bearing (50, 52, 54), the latter being separated from the said end (26c) by a small thickness of elastomeric material.

6. Device according to one of Claims 1 to 5, **characterized in that** the free end (15) of the rod (14) is threaded and **in that** the spring cup (22) is attached to the rod using a screw member (56) screwed onto the free end (15).

7. Device according to one of Claims 1 to 6, **characterized in that** it comprises an element forming a thrust bearing (58) arranged on the rod (14) against the spring cup (22) and underneath the latter.

8. Motor vehicle chassis (18) intended to accept at least one upper device (20) for attaching a front wheel suspension shock absorber according to one of Claims 1 to 7, **characterized in that** it is rigidly connected to the elastomeric mass in such a way that a part (64) of the chassis is situated substantially on top of the edge of the spring cup (22), some distance therefrom.

9. Chassis (18) according to Claim 8 when it is dependent on Claim 1 or on claims dependent on Claim 1, **characterized in that** the free end (64) of the chassis is situated substantially above the bulge (40) of the elastomeric mass (24).

10. Motor vehicle **characterized in that** it comprises a chassis (18) according to one of Claims 8 and 9.

## Patentansprüche

1. Obere Befestigungsvorrichtung (20) eines Aufhängungsdämpfers (10) eines Vorderrads am Fahrgestell (18) eines Kraftfahrzeugs, wobei der Dämpfer (10) aus einem Körper (12), einer in Translationsrichtung im Inneren dieses Körpers verschiebbaren Stange (14) und einer Windungsfeder (16), die konzentrisch um die Stange montiert ist, **dadurch gekennzeichnet, dass** sie enthält:
- eine einzige Schale (22), die am freien Ende (15) der Stange befestigt ist und deren Konkavität zum Rand dieses Endes gerichtet ist, wobei die Schale (22) eine Seitenwand (32) hat, deren freies Ende eine Randleiste (34) aufweist, die radial nach außerhalb der Schale vorsteht und sich in einer Ebene im Wesentlichen lotrecht zur Achse der Stange befindet,
- eine Masse aus Elastomermaterial (24), die eine Armierung (26) aufweist, und
- Verbindungseinrichtungen (28) zwischen der
Feder (16) und der Elastomermasse (24),
und dass die Elastomermasse (24) fest mit der Schale (22) verbunden und am Fahrgestell (18) des Fahrzeugs so befestigt ist, dass sie die Dämpfung der Bewegungen des Fahrzeugs im Wesentlichen gemäß der Achse der Stange gewährleistet,
wobei ein erster Teil (36) der Elastomermasse (24) die Seitenwand (32) und die Randleiste (34) der Schale bedeckt und sich im Wesentlichen radial außerhalb dieser erstreckt, so dass ein Raum (38) zwischen der Unterseite der Randleiste (34) und der Elastomermasse (24) geformt wird, um die Abpralle des Fahrzeugs zu dämpfen, und der erste Teil (36) einen Wulst (40) enthält, der sich auf der Oberseite der Randleiste (34) befindet und dazu bestimmt ist, bei einem axialen Stoß gegen das Fahrgestell (18) des Fahrzeugs in Anschlag zu kommen.

2. Vorrichtung nach Anspruch 1, **dadurch gekennzeichnet, dass** die Armierung (26) der Elastomermasse (24) einen Befestigungsteil (26b) am Fahrgestell (18) des Fahrzeugs aufweist, der sich in einer Ebene im Wesentlichen lotrecht zur Achse der Stange erstreckt und sich leicht unter dem Rand der Schale befindet, wobei der Befestigungsteil sich in Abstand zum Rand der Schale in radialer Richtung befindet.

3. Vorrichtung nach Anspruch 2, **dadurch gekennzeichnet, dass** der Befestigungsteil (26b) sich in einer Ebene im Wesentlichen parallel zur Randleiste (34) der Schale erstreckt und sich leicht unter dieser befindet, wobei der Teil (26b) sich im Wesentlichen über der Feder (16) in axialer Richtung befindet.

4. Vorrichtung nach einem der Ansprüche 1 bis 3, **dadurch gekennzeichnet, dass** die Verbindungseinrichtungen (28) einen Anschlag mit Kugeln (50, 52, 54) enthalten, der auf der Feder (16) des Dämpfers aufliegt und in axialem und radialem Kontakt mit einem zweiten Teil (42) der Elastomermasse (24) steht.

5. Vorrichtung nach Anspruch 4, **dadurch gekennzeichnet, dass** ein Ende (26c) der Armierung der Elastomermasse (24) im Wesentlichen radial gegenüber dem Anschlag mit Kugeln (50, 52, 54) angeordnet ist, wobei letzterer von dem Ende (26c) durch eine geringe Dicke von Elastomermaterial getrennt ist.

6. Vorrichtung nach einem der Ansprüche 1 bis 5, **dadurch gekennzeichnet, dass** das freie Ende (15) der Stange (14) ein Gewinde hat, und dass die Schale (22) an der Stange mittels eines Schrauborgans (56) befestigt ist, das auf das freie Ende (15) geschraubt ist.

7. Vorrichtung nach einem der Ansprüche 1 bis 6, **dadurch gekennzeichnet, dass** sie ein einen Anschlag (58) formendes Element enthält, das auf der Stange (14) gegen die Schale (22) und unter dieser angeordnet ist.

8. Fahrgestell (18) eines Kraftfahrzeugs, das dazu bestimmt ist, mindestens eine obere Befestigungsvorrichtung (20) eines Aufhängungsdämpfers eines Vorderrads nach einem der Ansprüche 1 bis 7 aufzunehmen, **dadurch gekennzeichnet, dass** es steif so mit der Elastomermasse verbunden ist, dass ein Teil (64) des Fahrgestells sich im Wesentlichen über dem Rand der Schale (22) in Abstand zu diesem befindet.

9. Fahrgestell (18) nach Anspruch 8, wenn er von Anspruch 1 oder von vom Anspruch 1 abhängenden Ansprüchen abhängt, **dadurch gekennzeichnet, dass** das freie Ende (64) des Fahrgestells sich im Wesentlichen über dem Wulst (40) der Elastomermasse (24) befindet.

10. Kraftfahrzeug, **dadurch gekennzeichnet, dass** es ein Fahrgestell (18) nach einem der Ansprüche 8 oder 9 enthält.
